# EUROPEAN PATENT SPECIFICATION

(11) **EP 4 521 187 B1**
(45) Date of publication and mention of the grant of the patent: **24.12.2025**
(21) Application number: 24191734.3
(22) Date of filing: 30.07.2024
(51) Int. Cl.: G05D 1/225, G05D 1/227, G05D 1/249, G05D 105/45, G05D 107/70, G05D 109/10, G05D 111/10

(54) **DEVICE FOR SWITCHING THE TRAVEL METHOD OF A MOVING OBJECT AND ASSOCIATED METHOD**
VORRICHTUNG ZUM UMSCHALTEN DES TRANSPORTVERFAHRENS EINES BEWEGLICHEN OBJEKTS UND VERFAHREN DAZU
DISPOSITIF DE COMMUTATION DE PROCÉDÉ DE TRANSPORT D'UN OBJET MOBILE ET PROCÉDÉ ASSOCIÉ

(30) Priority: 08.09.2023 JP 2023145728
(43) Date of publication of application: 12.03.2025
(73) Proprietor: TOYOTA JIDOSHA KABUSHIKI KAISHA, Aichi-ken, 471-8571 (JP)
(72) Inventor: IWAHORI, Kento, Toyota-shi, 471-8571 (JP); YOKOYAMA, Daiki, Toyota-shi, 471-8571 (JP)
(74) Representative: J A Kemp LLP

(56) References cited:
- JP-A- 2021 062 790
- US-A1- 2017 320 529

## Description

### BACKGROUND

### FIELD

The present disclosure relates to a transport method switching device, a transport switching method, and a moving object.

### RELATED ART

For example, Japanese Translation of PCT International Application Publication No. JP-T-2017-538619 discloses a technique that uses different transport methods, i.e., a vehicle transport method using a belt and a transport method using running of vehicle by remote control, in a system for manufacturing vehicles.

However, the previously-known technique merely teaches a configuration in which transport using running of a vehicle by remote control is performed after transport of the vehicle using a belt, and nowhere teaches a configuration in which transport of a vehicle using a belt is performed after transport using running of the vehicle by remote control.
JP 2021 062790 A discloses a transport method switching device comprising a position estimation unit that estimates a position of a moving object capable of moving by unmanned driving, using moving object information detected by a moving object detector, the moving object information being an image of the moving object, a command generation unit to automatically move the moving object by movement control using the estimated position of the moving object, a movement control determination unit that determines whether to stop the movement control using a moving object position, the moving object position being a position including the estimated position, wherein the command generation unit stops the movement control when the movement control determination unit determines to stop the movement control.
US 2017/320529 A1 discloses a method for operating a vehicle and for operating a manufacturing system.

### SUMMARY

The present disclosure may be realized by the following aspects.
(1) According to one aspect of the present disclosure, a transport method switching device is provided. The transport method switching device includes a position estimation unit that estimates a position of a moving object capable of moving by unmanned driving, using moving object information detected by a moving object detector, the moving object information being at least one of an image of the moving object and 3D point cloud data of the moving object, the moving object detector being configured to detect the moving object information; a command generation unit that generates and outputs a control command to automatically move the moving object by movement control using the estimated position of the moving object; and a movement control determination unit that determines whether to stop the movement control using a transport starting position of the moving object in a transport device, and a moving object position, the transport device being capable of transporting the moving object in a predetermined transport section, the moving object position being a position of the moving object in the transport section and including the estimated position. The transport method switching device further includes a transport information acquisition unit that acquires a transport speed of the moving object transported by the transport device. When the movement control determination unit determines to stop the movement control, the movement control determination unit further confirms the acquired transport speed. When the confirmed transport speed is slower than a predetermined reference speed, the command generation unit turns off a power source of the moving object and stop the movement control, and, when the confirmed transport speed is equal to or more than the predetermined reference speed, the command generation unit stops the movement control without turning off the power source of the moving object When the movement control determination unit determines to stop the movement control, the command generation unit stops the movement control.
   The transport method switching device according to this aspect is capable of smooth switching from a transport method using movement of the moving object by movement control to a transport method by the transport device. The transport method switching device according to this aspect is capable of stopping the movement control in a state suitable for each transport time of the transport by the transport device.
(2) In the transport method switching device according to the above aspect, when the acquired estimated position reaches the transport starting position, the movement control determination unit may determine to stop the movement control.
   The transport method switching device according to this aspect is capable of stopping the movement control at the transport starting position of the transport device, thereby suppressing occurrence of power consumption and processing burden caused by the transport method switching device during the transport by the transport device and enabling efficient switching of the transport methods.
(3) In the transport method switching device according to the above aspect, the command generation unit may stop the movement control either by stopping generation of the control command or by stopping transmission of the generated control command to the moving object.
   The transport method switching device according to this aspect is capable of stopping the movement control by a simpler method than turning off the power source of the transport method switching device or the moving object, thereby reducing the processing burden, etc. during the transport by the transport device.
(4) In the transport method switching device according to the above aspect, when the movement control determination unit determines to stop the movement control, the command generation unit may switch either to a mode in which power from a prime mover is not transmitted to a movement unit for moving the moving object or to a mode in which a power transmission unit for transmitting power from the prime mover to the movement unit is fixed, and may stop the movement control.

The transport method switching device according to this aspect is capable of switching the moving object to a mode in which the moving object is incapable of moving before the transport by the transport device, thereby suppressing or preventing the displacement in position of the moving object during the transport by the transport device.

(6) The transport method switching device according to the above aspect may further include a subsequent instruction unit that outputs an instruction to delay a timing of arrival of a subsequent moving object to the transport device when the moving object is not transported by the transport device after the movement control is stopped, the subsequent moving object being scheduled to be transported by the transport device next to the moving object.

The transport method switching device according to this aspect is capable of preventing the subsequent moving object from coming in contact with the moving object that has not started to be transported by the transport device and is stopped at the transport starting position.

(7) The transport method switching device according to the above aspect may further include a notification unit that provides notification when the moving object is not transported by the transport device after the movement control is stopped.

The transport method switching device according to this aspect is capable of allowing the abnormality countermeasures against the transport abnormalities by the transport device to be taken into action quickly, thereby facilitating quick restoration of the transport device.

The present disclosure may also be implemented in various aspects other than transport method switching devices. For example, the present disclosure may also be implemented in the form of a remote control device, a transport switching method, a moving object, a transport device, a transport system, a moving object transport method, a transport device control method, a transport system control method, a computer program for realizing these control methods, a non-transitory storage medium storing the computer programs, and the like.

### BRIEF DESCRIPTION OF THE DRAWINGS

Fig. 1 is an explanatory view showing a schematic structure of a transport system including a remote control device as a transport method switching device;
Fig. 2 is an explanatory view showing an internal functional structure of a vehicle;
Fig. 3 is a block diagram showing an internal functional structure of a remote control device according to a first embodiment;
Fig. 4A is a flowchart showing a vehicle running method achieved by a remote control device;
Fig. 4B is a block diagram showing an internal functional structure of a transport control device;
Fig. 5 is a flowchart showing a vehicle transport method according to the first embodiment of the present disclosure;
Fig. 6 is an explanatory view schematically showing a method for stopping remote control at a transport starting position;
Fig. 7 is a flowchart showing a vehicle transport method according to a second embodiment;
Fig. 8 is a block diagram showing a functional structure of ECU of a vehicle according to a third embodiment; and
Fig. 9 is a flowchart showing a vehicle running method according to the third embodiment.

### DETAILED DESCRIPTION

### A. First Embodiment

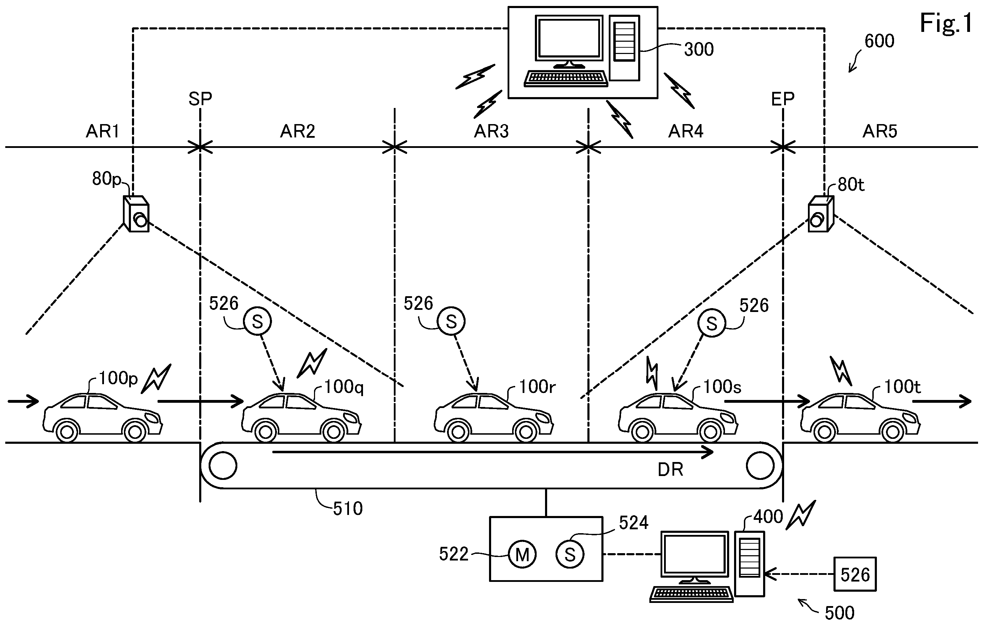

Fig. 1 is an explanatory view showing a schematic structure of a transport system 600 including a remote control device 300 as a transport method switching device according to a first embodiment of the present disclosure. The transport system 600 is used, for example, in a factory where a vehicle 100 is produced. The target to be transported by the transport system 600 is a vehicle 100 capable of running by remote control. For example, the transport system 600 is used in the inspection process or the assembly process of the vehicle 100, and transports the vehicle 100 across a predetermined transport section in the production process of the vehicle 100. The transport system 600 includes the remote control device 300, a vehicle detector 80, and a transport device 500.

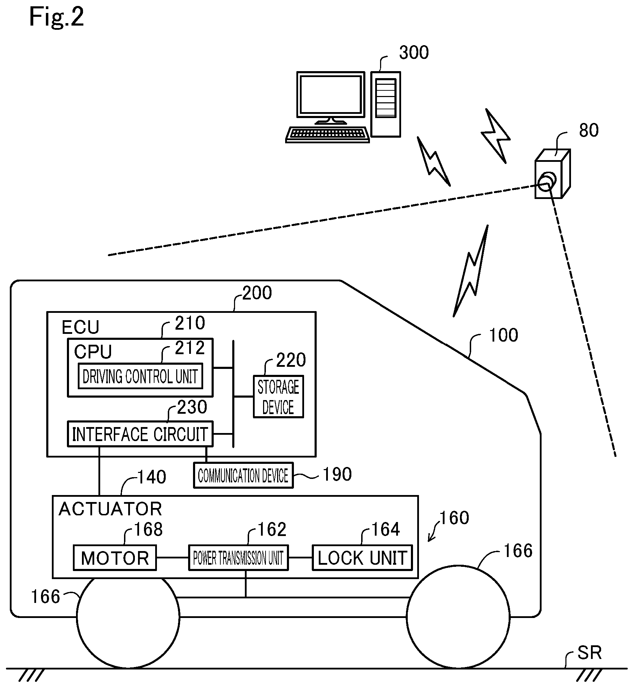

Fig. 2 is an explanatory view showing an internal functional structure of the vehicle 100. The vehicle 100 is, for example, a passenger car, a truck, a bus, a construction vehicle, or the like. In the present embodiment, the vehicle 100 is an electric vehicle (BEV: Battery Electric Vehicle) that can run by unmanned driving. The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving." In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

The ECU 200 is mounted on the vehicle 100 and performs various types of control of the vehicle 100. The ECU 200 includes HDD (hard disk drive), SSD (solid state drive), an optical storage medium, a storage device 220 such as a semiconductor memory, a CPU 210 as the central processing unit, and an interface circuit 230. The CPU 210, the storage device 220, and the interface circuit 230 are connected via an internal bus to enable bidirectional communication. An actuator 140 and a vehicle communication device 190 are connected to the interface circuit 230. The vehicle communication device 190 performs wireless communication with devices outside the vehicle 100, such as the remote control device 300, connected to a network via an access point or the like in the factory.

The storage device 220 stores a computer program to implement at least some functions provided in the present embodiment. As the CPU 210 executes various computer programs stored in the memory, the functions of a driving control unit 212 and the like are implemented.

The driving control unit 212 executes driving control of the vehicle 100. The "driving control" refers to various controls for driving each actuator 140 that exhibits the "running," "turning," and "stopping" functions of the vehicle 100, by, for example, adjusting acceleration, speed, and steering angle. If it is a moving object instead of the vehicle 100, the "driving control" may also be referred to as "movement control". In the present embodiment, the actuator 140 includes an actuator for a driving device 160 for accelerating the vehicle 100, an actuator for a steering device for changing the traveling direction of the vehicle 100, and an actuator for a braking device for decelerating the vehicle 100. The actuator 140 may further include an actuator for swinging wipers of the vehicle 100, an actuator for opening and closing power windows of the vehicle 100, and the like.

The actuator of the driving device 160 includes a driving battery (not shown), a driving motor 168 driven by the power of the driving battery, wheels 166, a power transmission unit 162, and a lock unit 164. The driving motor 168 is an example of a prime mover. Instead of the driving motor 168, prime movers, such as internal or external combustion engines, may be provided. Each wheel 166 is rotated by the power transmitted from the driving motor 168. The wheel 166 is an example of a movement unit for moving a moving object.

The power transmission unit 162 includes transmission mechanisms, such as gears and shafts, and transmits the power from the driving motor 168 to the wheel 166. The lock unit 164 switches between setting a fixed state of the transmission mechanisms of the power transmission unit 162 and releasing the fixed state. The lock unit 164 may also be referred to as a "parking lock pole". When the function of the power transmission unit 162 is switched to "P range", for example, by the remote control by a remote control unit 312 or by manual operation of the operation lever in the cabin by the driver or others, the transmission mechanism of the power transmission unit 162 is fixed by the lock unit 164. As a result, each wheel 166 is fixed and does not rotate. Further, when the function of the power transmission unit 162 is switched to "N range", the gears and the like in the transmission mechanisms of the power transmission unit 162 become disconnected, and the transmission of the power from the driving motor 168 to the wheel 166 stops. In the N range, the wheel 166 is rotatable by an external force. In the D range, the power transmission unit 162 transmits the power from the driving motor 168 to the wheel 166, thus making the vehicle 100 capable of running.

When the vehicle 100 has a driver, the driving control unit 212 is capable of causing the vehicle 100 to run by controlling the actuator 140 in response to the operation by the driver. Further, the driving control unit 212 is capable of causing the vehicle 100 to run by controlling the actuator 140 in response to control commands transmitted from the remote control device 300, regardless of whether the vehicle 100 has a driver.

The vehicle detector 80 is a device for measuring vehicle information. The "vehicle information" refers to information used for estimation of at least one of the position of the vehicle 100 and the orientation of the vehicle 100. The vehicle detector 80 in the present embodiment corresponds to an external sensor. The external sensor is a sensor located outside the vehicle 100. Further, the vehicle information corresponds to detection results output from the external sensor. In the present embodiment, a LiDAR (Light Detection And Ranging), which is a distance measuring device, is used as the vehicle detector 80. The vehicle detector 80 measures 3D point cloud data of the vehicle 100 as the vehicle information. The 3D point cloud data is data indicating the 3D position of a point cloud. By using a LiDAR, highly accurate 3D point cloud data can be acquired. It is also possible to acquire only the position of the vehicle 100 by the vehicle detector 80, and the orientation and the running direction of the vehicle 100 may be estimated by acquiring position changes or the like of the vehicle 100 over time.

The vehicle detector 80 is communicatively connected to the remote control device 300 by wireless or wired communication. By acquiring the 3D point cloud data from the vehicle detector 80, the remote control device 300 can acquire the position and orientation of the vehicle 100 relative to the target route in real time. The position of the vehicle detector 80 is fixed in the vicinity of a track SR and the transport device 500. The target route in the present embodiment corresponds to a reference route, which is described later.

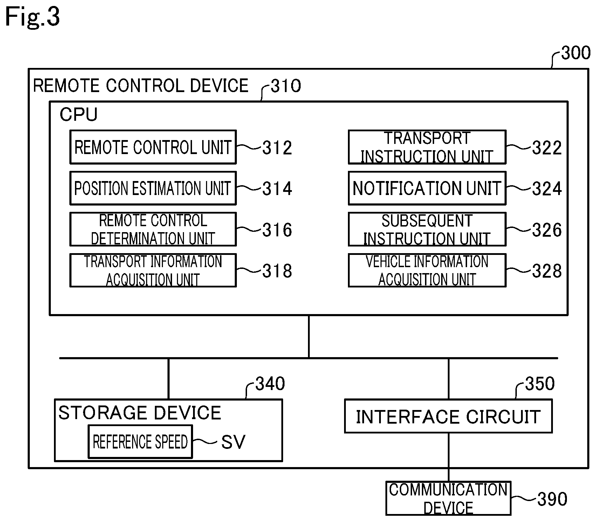

Fig. 3 is a block diagram showing an internal functional structure of the remote control device 300 according to the first embodiment. The remote control device 300 generates control commands for enabling automatic running of the vehicle 100 by remote control, and transmits the control commands to the vehicle 100, thereby performing driving control of the vehicle 100 by remote control. The remote control device 300 performs, for example, transport of the vehicle 100 in the transport section in the factory, for example, by performing automatic running of the vehicle 100 by remote control. In the present embodiment, the remote control device 300 also functions as, as described later, a transport method switching device that determines whether to stop driving control of the vehicle 100 by remote control using transport status information indicating a transport status of the vehicle 100 transported by the transport device 500.

The remote control device 300 includes a CPU 310 as the central processing unit, a storage device 340, an interface circuit 350, and a remote communication device 390. The CPU 310, the storage device 340, and the interface circuit 350 are connected via an internal bus to enable bidirectional communication. The remote communication device 390 is connected to the interface circuit 350. The remote communication device 390 communicates with the vehicle 100 and a transport control device 400 via a network or the like.

The storage device 340 is, for example, RAM, ROM, HDD, SSD, or the like. A readable/writable region of the storage device 340 stores a reference speed SV. The reference speed SV is a transport speed that is set during normal operation, among variable transport speeds for transporting the vehicle 100 by the transport device 500. The "transport speed that is set during normal operation" is, for example, a transport speed that is set in advance to achieve the target production time. The target production time is a production time set for a process to produce a single vehicle 100. The target production time may also be referred to as a "takt time". As described later, the reference speed SV serves as a threshold for determining the timing to release the vehicle 100 from the transport device 500.

The storage device 340 stores a computer program to implement at least some functions provided in the present embodiment. In response to the execution of the computer program stored in the storage device 340 by the CPU 310, the CPU 310 functions as the remote control unit 312, a position estimation unit 314, a remote control determination unit 316, a transport information acquisition unit 318, a transport instruction unit 322, a notification unit 324, a subsequent instruction unit 326, and a vehicle information acquisition unit 328. However, some or all of these functions may be configured by hardware circuits.

The position estimation unit 314 acquires the vehicle information from the vehicle detector 80, and estimates the position and orientation of the vehicle 100 using the acquired vehicle information. The position and the orientation estimated by the position estimation unit 314 correspond to the vehicle position information, which is described later. In the present embodiment, the position estimation unit 314 uses 3D point cloud data measured by the vehicle detector 80 as the vehicle information. The position estimation unit 314 estimates the position and orientation of the vehicle 100 in the acquired 3D point cloud data. Specifically, the position estimation unit 314 performs template matching on the 3D point cloud data using the vehicle point cloud data stored in the storage device 340 in advance. Therefore, the position and orientation of the vehicle 100 in the 3D point cloud data can be estimated with high accuracy. For example, 3D CAD data of the vehicle 100 can be used for the vehicle point cloud data as a template. The vehicle point cloud data may contain information for specifying the orientation of the vehicle 100. For example, ICP (Iterative Closest Point) algorithm or NDT (Normal Distribution Transform) algorithm can be used for template matching of the vehicle point cloud data with respect to 3D point cloud data.

The remote control unit 312 functions as a command generation unit that generates control commands to cause the vehicle 100 to perform various operations and outputs the control commands to the vehicle 100. For example, the remote control unit 312 generates a control command for remote control using the estimated position and orientation of the vehicle 100, and transmits the control command to the vehicle 100. This control command is, for example, a command to cause the vehicle 100 to run according to the target route stored in the storage device 340. The control command can be generated as a command that includes a driving or braking force and a steering angle. Optionally, the control command may be generated as a command that includes the future running route and at least one of the position and orientation of the vehicle 100. When the vehicle 100 receives the request for remote control, the driving control unit 212 of the ECU 200 performs driving control, thereby enabling automatic running of the vehicle 100.

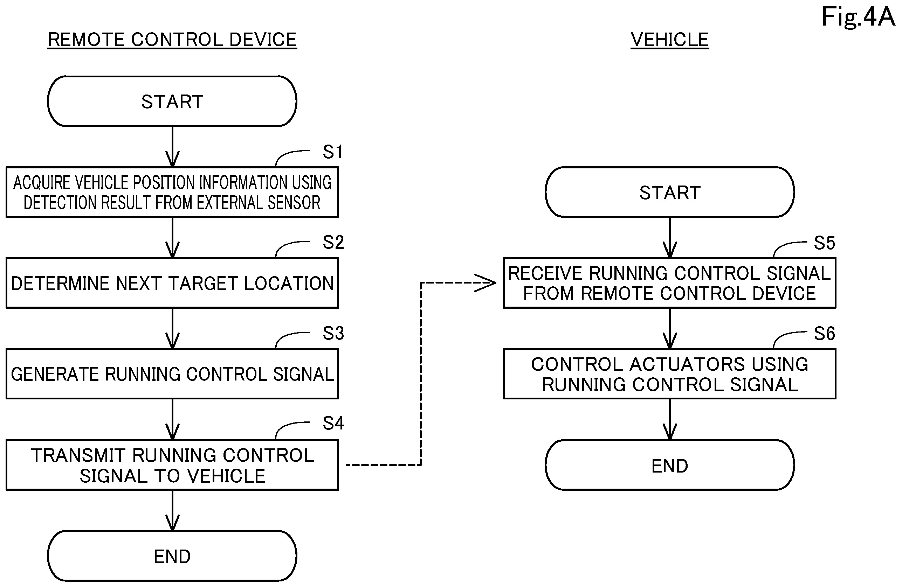

Fig. 4A is a flowchart showing a running method of the vehicle 100 achieved by the remote control device 300. In step S1, the remote control device 300 acquires vehicle location information using detection result output from an external sensor. The external sensor is located outside the vehicle 100. The vehicle location information is locational information as a basis for generating a running control signal. In the present embodiment, the vehicle location information includes the location and orientation of the vehicle 100 in a reference coordinate system of the factory. In the present embodiment, the reference coordinate system of the factory is a global coordinate system and a location in the factory can be expressed by X, Y, and Z coordinates in the global coordinate system. Specifically, in the step S1, the remote control unit 312 acquires the results of estimation of the position and orientation of the vehicle 100 by the position estimation unit 314. In the present embodiment, the position of the vehicle 100 includes X, Y, Z coordinates in the global coordinate system of the factory. The position of the vehicle detector 80 is adjusted in advance. The remote control unit 312 detects the position of the vehicle 100 from the vehicle information acquired from the vehicle detector 80, and acquires the position of the vehicle 100 in the factory from the detected position of the vehicle 100.

In step S2, the remote control unit 312 determines a target location to which the vehicle 100 is to move next. In the present embodiment, the target location is expressed by X, Y, and Z coordinates in the global coordinate system. The storage device 340 of the remote control device 300 contains a reference route stored in advance as a route along which the vehicle 100 is to run. The route is expressed by a node indicating a departure place, a node indicating a way point, a node indicating a destination, and a link connecting nodes to each other. The remote control device 300 determines the target location to which the vehicle 100 is to move next using the vehicle location information and the reference route. The remote control device 300 determines the target location on the reference route ahead of a current location of the vehicle 100.

In step S3, the remote control unit 312 generates a running control signal for causing the vehicle 100 to run toward the determined target location. In the present embodiment, the running control signal includes an acceleration and a steering angle of the vehicle 100 as parameters. The remote control unit 312 calculates a running speed of the vehicle 100 from transition of the location of the vehicle 100 and makes comparison between the calculated running speed and a target speed of the vehicle 100 determined in advance. If the running speed is lower than the target speed, the remote control unit 312 generally determines an acceleration in such a manner as to accelerate the vehicle 100. If the running speed is higher than the target speed as, the remote control unit 312 generally determines an acceleration in such a manner as to decelerate the vehicle 100. If the vehicle 100 is on the reference route, remote control unit 312 determines a steering angle and an acceleration in such a manner as to prevent the vehicle 100 from deviating from the reference route. If the vehicle 100 is not on the reference route, in other words, if the vehicle 100 deviates from the reference route, the remote control unit 312 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S4, the remote control unit 312 transmits the generated running control signal to the vehicle 100. The remote control unit 312 repeats the acquisition of vehicle location information, the determination of a target location, the generation of a running control signal, the transmission of the running control signal, and others in a predetermined cycle.

In step S5, the driving control unit 212 of the vehicle 100 receives the running control signal transmitted from the remote control device 300. In step S6, the driving control unit 212 controls the actuator 140 of the vehicle 100 using the received running control signal, thereby causing the vehicle 100 to run at the acceleration and the steering angle indicated by the running control signal. The driving control unit 212 repeats the reception of a running control signal and the control over the actuator 140 in a predetermined cycle. According to the transport system 600 in the present embodiment, it becomes possible to move the vehicle 100 without using a transport unit such as a crane or a conveyor.

Referring back to Fig. 3, the remote control determination unit 316 determines whether to stop the remote control. Specifically, the remote control determination unit 316 determines whether to stop the remote control using the vehicle position and the transport starting position of the vehicle 100 in the transport section of the transport by the transport device 500. The remote control determination unit 316 is an example of a movement control determination unit that determines whether to stop movement control with respect to a moving object using a transport starting position at which the transport of the moving object is started by the transport device 500 and a moving object position that is the position of the moving object in the transport section. The "vehicle position" is the position of the vehicle 100 in the transport section of the transport by the transport device 500. The vehicle position may be the position of the entire vehicle 100 or a position of a part of the vehicle 100. The "position of the entire vehicle 100" may be, for example, the position of each end of the vehicle 100 in the length, width, and height directions, a representative position of the vehicle 100, such as the center of gravity of the vehicle 100, or a set of positions of the parts of the vehicle 100. The "transport starting position" is a position in the transport section of the transport by the transport device 500 and is a position where the transport of the vehicle 100 is started by the transport device 500. The details of the transport starting position are described later.

In the transport starting position, the transport method of the vehicle 100 is switched from self-running conveyance by remote control to the transport method performed by the transport device 500. When the vehicle 100 running under remote control reaches the transport device 500 and further reaches the transport starting position in the transport section, the vehicle 100 becomes ready to be transported by the transport device 500. When the vehicle 100 becomes ready to be transported by the transport device 500, the remote control determination unit 316 determines to stop the remote control. That is, in the transport starting position, the transport method is switched from the self-running conveyance of the vehicle 100 by remote control to the transport by the transport device 500. The action of "stopping remote control" includes, for example, stopping the remote control unit 312 from generating control commands to perform remote control of the vehicle 100 and stopping the transmission of the control commands generated in the remote control device 300 to the vehicle 100. Alternative embodiments of stopping the remote control include turning off the power source or communication functions of the remote control device 300 and turning off the power source or communication functions of the vehicle 100.

The transport information acquisition unit 318 acquires transport status information that indicates a transport status of the vehicle 100. The "transport status information" refers to a vehicle position and a transport speed of the vehicle 100 transported by the transport device 500. The transport information acquisition unit 318 acquires a vehicle position VP stored in a storage device 440 from the transport control device 400, or acquires the vehicle position by acquiring the position of the vehicle 100 on a conveyor unit 510 from the vehicle detector 80 if the position of the vehicle 100 on the conveyor unit 510 can be acquired from the vehicle detector 80. The transport information acquisition unit 318 may acquire the vehicle position directly from a transport position detector 526. Further, in the present embodiment, the transport information acquisition unit 318 acquires the transport speed by acquiring a transport speed CV stored in the storage device 440 from the transport control device 400. The transport information acquisition unit 318 may acquire the transport speed directly from a transport speed detector 524.

The transport instruction unit 322 outputs, to the transport control device 400, instructions regarding the transport of the vehicle 100 by the transport device 500. The transport instruction unit 322 outputs an instruction to stop the transport of the vehicle 100 by the transport device 500, for example, when an abnormality in the transport of the vehicle 100 by the transport device 500 is detected after the remote control is stopped.

The notification unit 324 provides notification, for example, when an abnormality in the running of the vehicle 100 by remote control is detected. The notification unit 324 provides notification, for example, when an abnormality in the transport of the vehicle 100 by the transport device 500 is detected after the remote control is stopped.

The subsequent instruction unit 326 outputs an instruction to delay the timing of arrival of a subsequent vehicle to the transport device 500, for example, when an abnormality in the transport of the vehicle 100 by the transport device 500 is detected after the remote control is stopped. The "subsequent vehicle" is a vehicle scheduled to be transported by the transport device 500 next to the vehicle 100, or any timing later than that.

The vehicle information acquisition unit 328 acquires vehicle identification information of the target vehicle 100 to be transported by the transport device 500 from a production management device or the like. The "vehicle identification information" refers to various types of information that enables individual identification of each vehicle 100. The vehicle identification information includes, for example, ID information given to each vehicle 100, such as a vehicle identification number (VIN), the serial number of the vehicle 100 used for production control, and the like. The vehicle identification information may also be information regarding specifications of the vehicle 100, such as vehicle type, color, and shape. The vehicle identification information is not limited only to information for identifying a single vehicle 100, but may also be information for identifying a plurality of vehicles 100 per predetermined unit, for example, a lot number. The vehicle identification information can be acquired, for example, from radio frequency-identification (RF-ID) tags attached to the vehicle 100 via short-range wireless communication or the like. The vehicle identification information may be acquired by reading a two-dimensional code attached to the vehicle 100 with a camera or the like.

Referring back to Fig. 1, the transport device 500 includes the conveyor unit 510, a motor 522, the transport speed detector 524, a plurality of transport position detectors 526, and the transport control device 400. The motor 522 is controlled by the transport control device 400 to drive the conveyor unit 510.

The conveyor unit 510 transports the target vehicle 100 to be transported, toward a transport direction DR. In the present embodiment, the conveyor unit 510 is a belt conveyor with an annular endless belt, and transports the vehicle 100 placed on the endless belt. The conveyor unit 510 is not limited to only the belt conveyor, but may also be a roller conveyor, a chain conveyor, or various other conveyors capable of transporting the vehicle 100. The conveyor unit 510 is continuously driven regardless of whether the vehicle 100 is present on the conveyor unit 510. However, the conveyor unit 510 may only be driven with the vehicle 100 placed on the conveyor unit 510. The target to be transported by the conveyor unit 510 is not limited only to the vehicle 100, and the conveyor unit 510 may also transport, for example, workers who perform processes on the vehicle 100, parts of the vehicle 100, and the like, together with the vehicle 100. Further, the vehicle 100 needs not be transported with all the wheels 166 of the vehicle 100 in contact with the conveyor unit 510; instead, the vehicle 100 may be transported with only the wheels 166 on one side of the vehicle 100 in the width direction in contact with the conveyor unit 510. The conveyor unit 510 is not limited only to a device that transports the vehicle 100 placed on the conveyor unit 510, but may also be a device that transports the vehicle 100 not placed on the conveyor unit 510, such as, so-called a lifter, provided that the vehicle 100 is made ready for running by remote control at the start and end of transport by the conveyor unit 510. The vehicle 100 on the conveyor unit 510 can be released from the conveyor unit 510 at an arbitrary timing by automatic running by the remote control.

The transport speed detector 524 detects the transport speed of the vehicle 100 being transported by the conveyor unit 510. The transport position detector 526 detects the presence or absence of the vehicle 100 on the conveyor unit 510. The transport position detector 526 is, for example, a detector of various kinds capable of detecting the presence or absence of target objects, such as an infrared sensor, an ultrasonic sensor, and a millimeter wave radar. In the present embodiment, there are a plurality of transport position detectors 526, and a plurality of transport information acquisition units 318 are provided at each predetermined transport section of the transport system 600 to detect the presence or absence of the vehicle 100 at each transport section. The detection results of the transport speed detector 524 and the transport position detector 526 are output to the transport control device 400. If the transport speed and the transport position are not used in the determination as to whether to stop the remote control, the transport speed detector 524 and the transport position detector 526 may be omitted.

Fig. 1 schematically shows the transport section of the vehicle 100 from a range AR1 to a range AR5. Fig. 1 also shows vehicles 100p, 100q, 100r, 100s, and 100t, which are examples of the vehicle 100, and vehicle detectors 80p and 80t, which are examples of the vehicle detector 80. The ranges AR1 and AR5 are transport sections where automatic running of the vehicle 100 is performed by remote control. In the range AR1, the vehicle 100p that has started running from the pre-step runs to the transport device 500 by remote control using the vehicle information acquired from the vehicle detector 80p. The range AR5 is a transport section where the vehicle 100t that has been released from the transport system 600 runs to the next step or the like by remote control using the vehicle information acquired from the vehicle detector 80p.

The ranges AR2 to AR4 are transport sections of the vehicle 100 transported by the transport device 500. The range AR2 is the transport starting position where the transport of the vehicle 100 by the transport device 500 is started. In the range AR2, the transport method of the vehicle 100 is switched from the self-running conveyance by the remote control to the conveyor transport by the transport device 500. As shown on the left edge of Fig. 1, the vehicle 100p that runs by remote control enters the range AR2 by crossing a starting point SP on one end of the conveyor unit 510. The vehicle 100q that has reached the range AR2 becomes ready to be transported by the conveyor unit 510.

The range AR3 is an area where the vehicle 100r that is being transported by the transport device 500 undergoes a predetermined process, such as an inspection process. In the present embodiment, the range AR3 is a region outside the detection range by the vehicle detector 80, and automatic running of the vehicle 100r by remote control is not performed in the range AR3. However, in the range AR3, the vehicle 100r may be capable of wireless communication with the remote control device 300, and, for example, remote control without using the vehicle information, such as those for turning on or off the power sources of the vehicle 100 or various units, may be performed. Further, the range AR3 may be set within the detection range of the vehicle detector 80, and remote control using the vehicle information may be performed also in the range AR3.

The range AR4 is an area where the transport of the vehicle 100 by the transport device 500 ends. The vehicle 100 reaches the range AR4 after the process in the range AR3 is completed. In the range AR4, the vehicle 100s is detectable by the vehicle detector 80t. That is, self-running conveyance by remote control becomes possible in the range AR4, and the vehicle 100s is allowed to automatically run to be released from the conveyor unit 510. In the present embodiment, the range AR4 is set in advance as the range from an ending point EP at the other end of the conveyor unit 510 to a predetermined distance. This "predetermined distance" is determined, for example, based on the range within which the vehicle detector 80t can detect the vehicle 100t. However, the range AR4 may be any range from the position where the process for the vehicle 100r in the range AR3 is completed to the ending point EP, assuming that the vehicle detector 80t is capable of detecting the vehicle 100t. In this case, the size of the range AR4 may be varied depending on the progress of the process for the vehicle 100 in the range AR3.

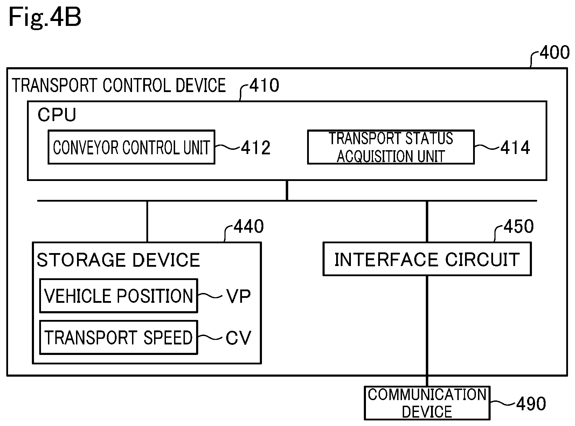

Fig. 4B is a block diagram showing an internal functional structure of the transport control device 400. The transport control device 400 includes a CPU 410 as the central processing unit, the storage device 440, an interface circuit 450, and a transport communication device 490. The CPU 410, the storage device 440, and the interface circuit 450 are connected via an internal bus to enable bidirectional communication. The interface circuit 450 is connected to the transport communication device 490. The transport communication device 490 communicates with the remote control device 300 and the vehicle 100 via a network or the like.

The storage device 440 is, for example, RAM, ROM, HDD, SSD, or the like. A readable/writable region of the storage device 440 stores the transport speed CV detected by the transport speed detector 524 and the vehicle position VP detected by the transport position detector 526. The storage device 440 stores a program to implement at least some functions provided in the present embodiment. The CPU 410 executes the program to function as a conveyor control unit 412 and a transport status acquisition unit 414. The conveyor control unit 412 drives the motor 522 to control turning on/off of the conveyor unit 510 and the transport speed of the conveyor unit 510.

The transport status acquisition unit 414 acquires transport status information. Specifically, the transport status acquisition unit 414 acquires the position of the vehicle 100, i.e., the vehicle position, in the transport section of the transport by the transport device 500 from the transport position detector 526 and stores it as the vehicle position VP in the storage device 440. The position of the vehicle 100 in the transport section may be acquired using the vehicle detector 80. The transport status acquisition unit 414 acquires the transport speed CV of the vehicle 100 transported by the transport device 500 from the transport speed detector 524, and stores it as the transport speed CV in the storage device 440. If the transport speed and the transport position are not used in the determination as to whether to stop the remote control by the remote control determination unit 316, the transport status acquisition unit 414 may be omitted.

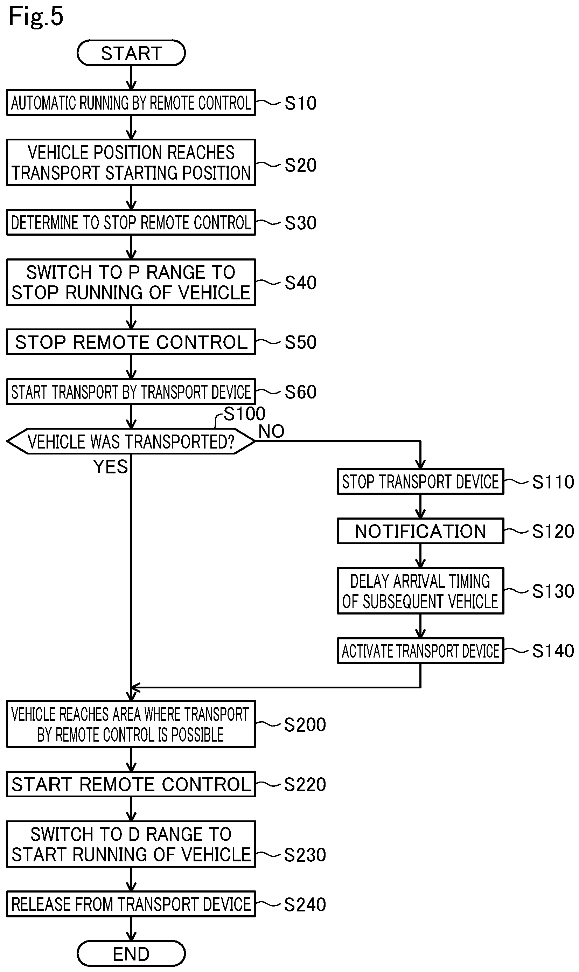

Fig. 5 is a flowchart showing a transport switching method for the vehicle 100 according to the first embodiment of the present disclosure. This flow is started when the vehicle 100 on which the processing in the pre-step has been completed starts running toward the transport device 500. In the following description, Fig. 1 is referred to as appropriate to facilitate understanding of the technical details.

In the step S10, the remote control unit 312 causes the vehicle 100p to automatically run toward the transport device 500 by remote control, as shown in the range AR1 in Fig. 1. More specifically, the remote control unit 312 generates a control command for enabling remote control using the position and orientation of the vehicle 100p estimated by the position estimation unit 314, and transmits the control command to the vehicle 100p. When the vehicle 100p arrives at the transport device 500, the remote control unit 312 causes the vehicle 100p to run beyond the starting point SP of the conveyor unit 510 by remote control using the vehicle information acquired from the vehicle detector 80p. Before the transport by the transport device 500 is started, the transport control device 400 acquires the vehicle identification information from the vehicle 100p that has arrived at the transport device 500, and confirms whether the acquired vehicle identification information matches the vehicle identification information of the target vehicle for transport in production control. However, the matching may be omitted, and the vehicle information acquisition unit 328 may be omitted if the vehicle identification information is not used.

In the step S20, the remote control unit 312 causes the vehicle 100 on the conveyor unit 510 to automatically run by remote control to move the vehicle 100 to the range AR2, which is the transport starting position. In the step S30, when the estimated position of the vehicle 100q acquired by the vehicle detector 80t reaches the transport starting position as in the vehicle 100q in Fig. 1, the remote control determination unit 316 determines to stop the remote control.

In the step S40, the remote control unit 312 drives the lock unit 164 of the vehicle 100 by remote control to switch the function of the power transmission unit 162 to the P range. The remote control unit 312 may switch the function of the power transmission unit 162 to the N range instead of switching it to the P range. In this case, the remote control unit 312 preferably further drives an electric parking brake (EPB) or the like by remote control to ensure that the vehicle 100 is stopped. In the step S50, the remote control unit 312 stops the remote control of the vehicle 100.

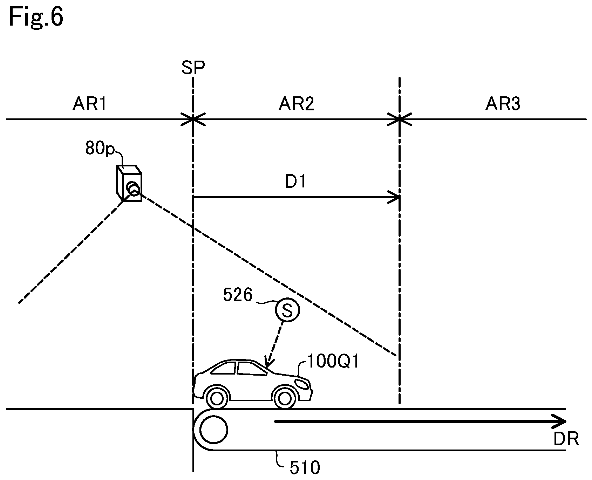

Fig. 6 is an explanatory view schematically showing a method for stopping remote control at the transport starting position. Fig. 6 shows an enlarged view of the transport section of the transport by the transport device 500 near the starting point SP. The vehicle 100Q1 runs under remote control by the remote control unit 312, crosses the starting point SP to enter the conveyor unit 510, and reaches the transport starting position.

The transport starting position is not limited to only a predetermined specific position, but can be set using a predetermined range. The transport starting position can be set, for example, using any range included in the transport section of the transport by the transport device 500, assuming that the vehicle 100Q1 can arrive by automatic running under remote control. The expression "the vehicle 100Q1 has arrived at the transport starting position" can mean any state as long as the vehicle 100Q1 is ready to be transported by the transport device 500. For example, the entire vehicle 100Q1 may not be included in the range AR2, and, for example, a part of the rear side of the vehicle 100Q1 may be deviated from the starting point SP. The transport starting position may further be set using a wider range than the range above, considering, for example, errors in the stopping position of the vehicle 100 by remote control. However, in view of reduction in size of the conveyor unit 510, it is preferable that the range of the transport starting position be small. Further, the transport starting position may be set individually for each individual vehicle corresponding to the vehicle identification information, considering the difference in size depending on the vehicle type.

In the present embodiment, the transport starting position is set in advance as a range from the starting point SP to a predetermined distance D1. The predetermined distance D1 is included, for example, in the transport section of the transport by the transport device 500, and is set in advance based on the range within which the vehicle detector 80p can detect the vehicle 100Q1. In the example shown in Fig. 6, the transport starting position coincides with the range AR2, and is set as a range that can include the vehicle 100Q1.

As shown in Fig. 6, the vehicle 100Q1 that has reached the transport starting position becomes ready to be transported by the conveyor unit 510. When the vehicle 100Q1 reaches the transport starting position, the remote control determination unit 316 determines to stop the remote control of the vehicle 100Q1. In the present embodiment, whether the vehicle 100Q1 has arrived at the range AR2 can be made using the estimated position of the vehicle 100Q1 relative to the starting point SP in the 3D point cloud data acquired by the vehicle detector 80p. However, whether the vehicle 100Q1 has arrived at the range AR2 may also be made according to results of detection of the presence or absence of the vehicle 100Q1 in the range AR2 by the transport position detector 526 provided in the range AR2.

In the present embodiment, before the remote control unit 312 stops the remote control, the remote control unit 312 drives the lock unit 164 shown in the Fig. 2 by remote control, thereby switching the function of the power transmission unit 162 to the P range. As a result, the transmission mechanism of the power transmission unit 162 is fixed, thereby stopping the running of the vehicle 100Q1. The remote control unit 312 may further turn off the power source of the vehicle 100Q1 or power sources of any units of the vehicle 100Q1. The remote control unit 312 switches the vehicle 100Q1 into a state where the running of the vehicle 100Q1 stops, and stops the remote control of the vehicle 100Q1. In the present embodiment, the stopping of the remote control of the vehicle 100q may be achieved by stopping the generation of control commands by the remote control device 300 or by stopping the transmission of control commands to the vehicle 100q.

By thus stopping the remote control of the vehicle 100 during the transport by the transport device 500, the power consumption of the remote control device 300 and the like can be reduced, and also processing burden of the remote control device 300 and other devices mounted on the vehicle 100Q1, such as a control device, can be reduced. Further, the power consumption of the vehicle 100Q1 can be reduced by stopping the running of the vehicle 100Q1 during the transport by the transport device 500. Further, by stopping the running of the vehicle 100Q1, for example, workers can smoothly perform inspections on the electrical system, engine compartment, and the like, of the vehicle 100Q1 while the vehicle 100Q1 is being transported.

Referring back to Fig. 5, in the step S60, the transport control device 400 controls the motor 522 to drive the conveyor unit 510, thereby starting the transport of the vehicle 100. In the step S100, the transport instruction unit 322 confirms whether the vehicle 100 is transported by the transport device 500. That is, whether there are any abnormalities in the transport by the transport device 500 is inspected. Whether the vehicle 100 is transported by the transport device 500 can be made by detecting, for example, the presence or absence of the vehicle 100q or 100r acquired by the transport position detector 526 provided in the range AR2 or the range AR3 shown in Fig. 2, or according to the vehicle information or the like acquired by the vehicle detector 80t.

If the transport of the vehicle 100 is detected (S100: YES), the remote control unit 312 forwards the process to the step S200. If the transport of the vehicle 100 is not detected (S100: NO), the remote control unit 312 forwards the process to the step S110 to perform various abnormality countermeasures. The following step S110 to step S140 may be performed in any order or simultaneously.

In the step S110, the transport instruction unit 322 outputs, to the transport control device 400, an instruction to stop the transport of the vehicle 100 by the transport device 500, as an example of the abnormality countermeasure. Upon receiving the instruction to stop the transport, the transport control device 400 stops the conveyor unit 510 by stopping the motor 522 or the like, thereby stopping the transport of the vehicle 100. If the transport abnormality can be resolved quickly, the transport instruction unit 322 may output an instruction to decrease the transport speed of the vehicle 100 transported by the transport device 500, instead of an instruction to stop the transport device 500.

In the step S120, the notification unit 324 notifies, for example, that the movement of the vehicle 100 is not detected or that the abnormality countermeasure has been executed. The notification unit 324 provides the notification to, for example, workers who perform work on the vehicle 100 on the conveyor unit 510, the manager of the step, or the manager of the transport system 600.

In the step S130, the subsequent instruction unit 326 outputs an instruction to delay the timing of arrival of the subsequent vehicle at the transport device 500. The subsequent instruction unit 326 outputs the instruction to, for example, a step management device for the pre-step, a production management device that supervises each step, a remote control device that causes the subsequent vehicle to run by remote control, and the like. The subsequent instruction unit 326 delays the timing of arrival of the subsequent vehicle, for example, according to the delay time relative to the target production time. By delaying the arrival of the subsequent vehicle, it is possible to prevent the subsequent vehicle from arriving at the transport device 500 before the transport device 500 is restored, thereby suppressing or preventing an increase of in-process products waiting for the transport by the transport device 500, thus suppressing a decrease in production efficiency.

In the step S140, the transport instruction unit 322 outputs, to the transport control device 400, an instruction to activate the transport device 500 that has been stopped. As a result, the transport of the vehicle 100 by the transport device 500 is started again. If the instruction to decrease the transport speed CV of the vehicle 100 has been output instead of the instruction to stop the transport device 500, the transport instruction unit 322 may output an instruction to restore the decreased transport speed CV to the original transport speed CV to the transport control device 400. To eliminate the delay relative to the target production time, it is also possible to set the transport speed CV to be faster than the transport speed before the restart. Further, the subsequent instruction unit 326 restores the delayed running of the subsequent vehicle to normal running.

In the step S200, the remote control unit 312 detects that the vehicle 100 has reached an area where the vehicle 100 can be transported by remote control. Whether the vehicle 100 has reached the area where remote control is possible can be detected, for example, by the transport position detector 526 provided in the range AR4 shown in Fig. 1, or according to the vehicle information or the like acquired by the vehicle detector 80t.

In the step S220, the remote control unit 312 starts the remote control of the vehicle 100 that has reached the area where remote control is possible. In the step S230, the remote control unit 312 switches the function of the power transmission unit 162 to the D range by remote control to start the running of the vehicle 100 by remote control. Specifically, the remote control unit 312 drives the lock unit 164 to release the fixed state of the transmission mechanism of the power transmission unit 162, thereby switching the vehicle 100 to be ready for running. As shown in the range AR4 in Fig. 1, the remote control device 300 generates a control command for automatic running of the vehicle 100s using the vehicle information acquired from the vehicle detector 80t, and transmits the control command to the vehicle 100s. In the step S240, the remote control unit 312 releases the vehicle 100s from the conveyor unit 510 by remote control, and ends the flow. The vehicle 100t that has been released from the transport device 500 is let out to the next step by automatic running.

As described above, the remote control device 300 in the present embodiment includes the remote control determination unit 316 that determines whether to stop the driving control of the vehicle 100 by stopping the remote control using the transport starting position of the vehicle 100 by the transport device 500 and the vehicle position that is the position of the vehicle 100 in the transport section of the transport by the transport device 500. It is possible to perform smooth switching from a transport method using running of the vehicle 100 under remote control to a transport method for transporting the vehicle 100 using the transport device 500. Further, by stopping the remote control during the transport, the power consumption and the processing burden caused by the remote control device 300 and other devices can be reduced during the transport by the transport device 500.

According to the remote control device 300 of the present embodiment, when the estimated position of the vehicle 100 acquired by the position estimation unit 314 reaches the transport starting position, the remote control determination unit 316 determines to stop remote control. Causing the vehicle 100 to reach the transport starting position of the transport device 500 and whether the vehicle 100 is disposed at the transport starting position can be performed by the vehicle detector 80, the remote control device 300, and the like, without using the various units of the transport device 500. Therefore, by stopping the remote control at the transport starting position of the transport device 500, the power consumption and the processing burden caused by the remote control device 300 and other devices can be reduced during transport by the transport device 500, thereby efficiently switching the transport method.

According to the remote control device 300 of the present embodiment, the remote control unit 312 stops the remote control either by stopping the generation of control commands or stopping the transmission of the generated control commands to the vehicle 100. This makes it possible to stop the remote control by a simpler method than turning off the power source of the remote control device 300 or the vehicle 100, thereby reducing the processing burden, etc. during the transport by the transport device 500. Further, it is possible to easily restart the remote control at the end of the transport of the vehicle 100 by the transport device 500.

According to the remote control device 300 of the present embodiment, when the remote control determination unit 316 determines to stop the remote control, the remote control unit 312 switches to either the N range in which the power from the driving motor 168 is not transmitted to the wheels 166 of the vehicle 100, or to the P range in which the power transmission unit 162 for transmitting power from the driving motor 168 to the wheels 166 is fixed, and then stops the remote control. By switching the vehicle 100 to a mode in which the vehicle 100 is incapable of running before the transport by the transport device 500, it is possible to suppress or prevent the displacement in position of the vehicle 100 during the transport by the transport device 500.

The remote control device 300 of the present embodiment further includes the subsequent instruction unit 326 that outputs an instruction to delay the timing of arrival of the subsequent vehicle scheduled to be transported by the transport device 500 after the vehicle 100, at the transport device 500, if the vehicle 100 is not transported by the transport device 500 after the remote control is stopped. It is possible to prevent the subsequent vehicle from colliding with the vehicle 100 that has not started to be transported by the transport device 500 and is stopped at the transport starting position.

The remote control device 300 of the present embodiment further includes the notification unit 324 that provides notification when the vehicle 100 is not transported by the transport device 500 after the remote control is stopped. The abnormality countermeasures to address the abnormalities in the transport by the transport device 500 can be taken into action quickly, thereby facilitating quick restoration of the transport device 500.

The remote control device 300 of the present embodiment further includes the transport instruction unit 322 that outputs an instruction to stop the transport of the vehicle 100 by the transport device 500 when the vehicle 100 is not transported by the transport device 500 after the remote control is stopped. When the vehicle 100 is not transported by the transport device 500, stopping the transport by the transport device 500 allows to obtain time to execute abnormality countermeasures.

### B. Second Embodiment

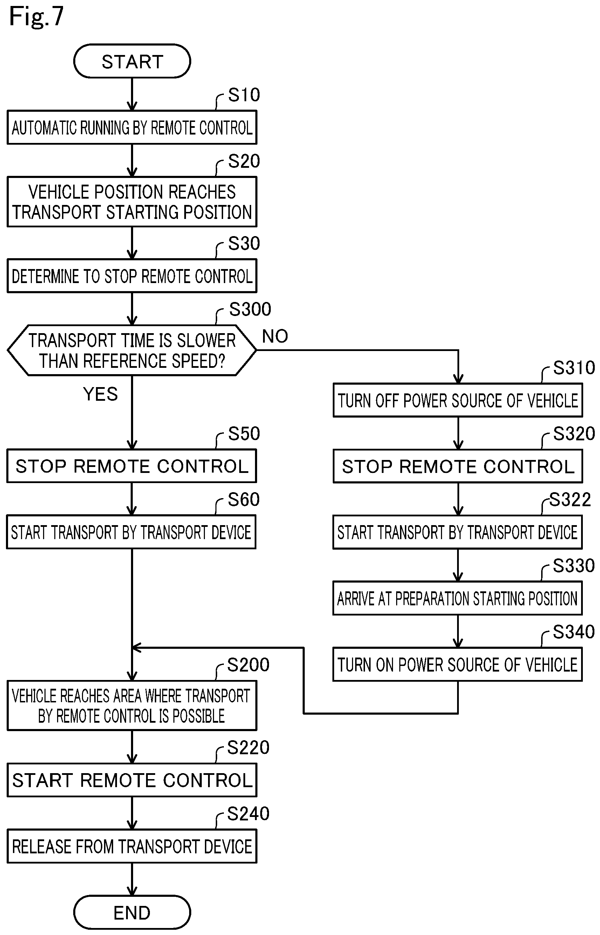

Fig. 7 is a flowchart showing a transport method for the vehicle 100 according to the second embodiment. The transport method of the present embodiment differs from the transport method according to the first embodiment shown in Fig. 5 in that the step S40 and the step S230 are omitted in the present embodiment. The first embodiment described above shows an example in which, when the remote control determination unit 316 determines to stop the remote control, the function of the power transmission unit 162 is switched to the P range, and then the remote control is stopped. Optionally, for example, if the movement of the vehicle 100 is restricted by a fixture or the like to fix the vehicle 100 during the transport by the transport device 500, the remote control may be stopped without switching the function of the power transmission unit 162, as in the present embodiment.

Further, the transport method of the present embodiment differs from the transport method of the first embodiment in that the processes from the step S100 to the step S140 are omitted in the present embodiment. Specifically, the first embodiment described above shows an example in which abnormality countermeasures from the step S110 to the step S140 are executed when the vehicle 100 is not transported by the transport device 500 after the remote control is stopped. Optionally, as in the present embodiment, the processes from the step S100 to the step S140 may be omitted so that the abnormality countermeasures are not executed. However, any one of the abnormality countermeasures including an action of stopping the transport device 500, notification by the notification unit 324, and output of an instruction to delay the arrival timing of the subsequent vehicle, or any combination of these abnormality countermeasures, may be executed.

Further, the transport method of the present embodiment differs from the transport method of the first embodiment in that the step S300 to the step S340 are provided after the step S30 in the present embodiment. Specifically, when the remote control determination unit 316 determines to stop the remote control in the step S30, the remote control determination unit 316 forwards the process to the step S300. In the step S300, the remote control determination unit 316 further confirms the transport speed CV of the vehicle 100 transported by the transport device 500, and compares the transport speed CV with the reference speed SV. If the confirmed transport speed CV is slower than the reference speed SV (S300: YES), the remote control unit 312 forwards the process to the step S50. The remote control unit 312 may confirm the transport time instead of confirming the transport speed CV, and may forward the process to the step S50 when the transport time is longer than a reference transport time. In the step S50, the remote control unit 312 stops the remote control of the vehicle 100 in the same method as that in the first embodiment described above. More specifically, the remote control unit 312 stops the movement of the vehicle 100 not by turning off the power source of the vehicle 100 but by stopping the generation of control commands for enabling remote control of the vehicle 100 or stopping the transmission of the generated control commands to the vehicle 100.

If the transport speed CV is equal to or greater than the reference speed SV (S300: NO), the remote control unit 312 forwards the process to the step S310 to turn off the power source of the vehicle 100 by remote control. "Turning off the power source of the vehicle 100" means turning off the ignition or the engine of the vehicle 100. In the step S320, the remote control unit 312 stops the remote control of the vehicle 100. In this case, the stopping of the remote control may be achieved by turning off the power source of the vehicle 100 in the step S320, or, as in the first embodiment described above, by stopping the generation of control commands for enabling remote control of the vehicle 100 or stopping the transmission of the generated control commands to the vehicle 100 by the remote control unit 312. In the step S322, the transport control device 400 controls the motor 522 to drive the conveyor unit 510, thereby starting the transport of the vehicle 100.

In the step S330, the vehicle 100 is transported by the transport device 500 and reaches the remote control preparation starting position. The "remote control preparation starting position" is the position where the preparation to enable remote control at a predetermined position is started. In the present embodiment, the "predetermined position" is any position within the range AR4, and the preparation starting position is a position included in the range AR3. The fact that the vehicle 100 has reached the preparation starting position can be detected by the transport position detector 526 provided in the range AR3, etc. The same detection may be done by the vehicle detector 80 if the vehicle detector 80 is provided in the range AR3. In the step S340, the remote control unit 312 turns on the power source of the vehicle 100 and starts preparing for remote control by initiating control of various units of the vehicle 100 and the remote control device 300. By the time the vehicle 100 reaches the area where the vehicle 100 can be transported by remote control, the preparation for the remote control is completed, enabling the remote control unit 312 to start the remote control of the vehicle 100.

As described above, according to the remote control device 300 of the present embodiment, when the remote control determination unit 316 determines to stop the remote control, the remote control determination unit 316 further confirms the transport speed CV of the vehicle 100 transported by the transport device 500. If the confirmed transport speed CV is slower than the predetermined reference speed SV, the remote control unit 312 turns off the power source of the vehicle 100 and then stops the remote control. If the transport speed CV is equal to or greater than the reference speed SV, the remote control is stopped without turning off the power source of the vehicle 100. If the transport time of the transport by the transport device 500 is long enough to provide sufficient preparation time to restart the remote control, the power source of the vehicle 100 is turned off to reduce power consumption of the vehicle 100, and, if the transport time is short and the preparation time to restart the remote control is short, it is possible to rapidly restart the remote control by stopping the remote control of the vehicle 100 in a simple manner instead of turning off the power source of the vehicle 100. In this way, the remote control can be stopped in a state suitable for each transport time of the transport by the transport device 500.

### C. Third Embodiment

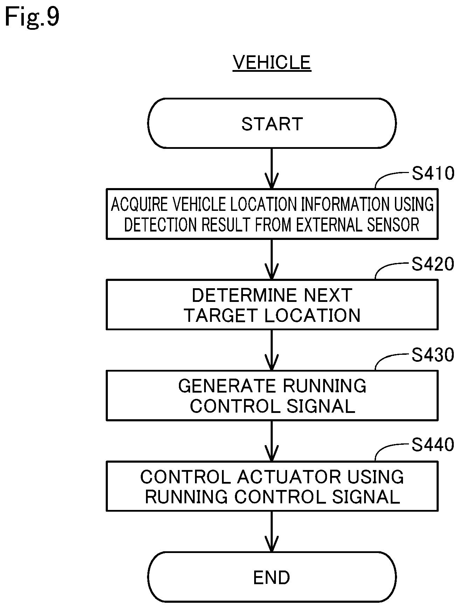

Fig. 9 is a block diagram showing a functional structure of an ECU 200c in the vehicle 100 according to the third embodiment. The transport system 600 in the present embodiment differs from that in the first embodiment in that the transport system 600 of the present embodiment does not include the remote control device 300. Specifically, the transport system 600 of the present embodiment differs from that of the first embodiment in that the ECU 200c provided in the vehicle 100 functions as a transport method switching device in place for the remote control device 300. The rest of the structure of the transport system 600 is the same as that in the first embodiment, unless otherwise specified.

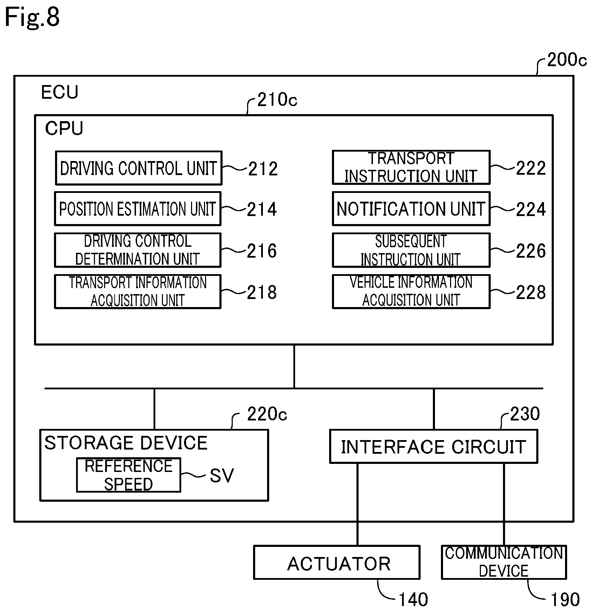

As shown in Fig. 8, the ECU 200c differs from the ECU 200 in the first embodiment in that the ECU 200c includes a CPU 210c instead of the CPU 210 and a storage device 220c instead of the storage device 220. Specifically, in addition to the function of the CPU 210 shown in the first embodiment, the storage device 220c stores programs to implement the functions corresponding to the position estimation unit 314, the remote control determination unit 316, the transport information acquisition unit 318, the transport instruction unit 322, the notification unit 324, the subsequent instruction unit 326, and the vehicle information acquisition unit 328 of the remote control device 300 shown in the first embodiment. This enables the CPU 210c to further function as the position estimation unit 214, the driving control determination unit 216, the transport information acquisition unit 218, the transport instruction unit 222, the notification unit 224, the subsequent instruction unit 226, and the vehicle information acquisition unit 228 corresponding to these functions. Further, the storage device 220c also stores the reference speed SV, which is stored in the remote control device 300 in the first embodiment. In the present embodiment, the driving control determination unit 216 determines whether to stop the automatic running of the vehicle 100 by the driving control using the transport starting position of the transport device 500 and the vehicle position. The driving control determination unit 216 is an example of a movement control determination unit that determines whether to stop movement control using the transport starting position and the moving object position. Further, when it is determined to stop automatic running by the driving control, the driving control determination unit 216 functions as a command generation unit that generates and outputs, to the driving control unit 212, a control command to stop the driving control. According to the vehicle 100 configured in this way, since the vehicle 100 has the function as the transport method switching device, it is possible to perform smooth switching from the transport method using running of the vehicle 100 by remote control to the transport method for the vehicle 100 by the transport device 500 without using a device separate from the vehicle 100, such as the remote control device 300.

Fig. 9 is a flowchart showing a running method of the vehicle 100 of the present embodiment. In step S410, the position estimation unit 214 acquires vehicle location information using detection result output from external sensor. In step S420, the driving control determination unit 216 determines a target location to which the vehicle 100 is to move next. In step S430, the driving control determination unit 216 generates a running control signal for causing the vehicle 100 to run to the determined target location. In step S440, the driving control determination unit 216 controls the actuator 140 using the generated running control signal, thereby causing the vehicle 100 to run by following a parameter indicated by the running control signal. The vehicle 100 repeats the acquisition of vehicle location information, the determination of a target location, the generation of a running control signal, and the control over the actuator 140 in a predetermined cycle. According to the running control in the present embodiment, it is possible to cause the vehicle 100 to run by autonomous control without controlling the vehicle 100 remotely using the remote control device 300. More specifically, in the step S410, the position estimation unit 214 acquires the position and orientation of the vehicle 100 using the vehicle information output from the vehicle detector 80. Further, in the present embodiment, the reference route is stored in advance in the storage device 220c of the ECU 200c.

### D. Alternative Embodiments

(D1) Each of the embodiments described above shows an example in which the remote control determination unit 316 and the driving control determination unit 216 estimate the position of the vehicle 100 using the vehicle information detected by the vehicle detector 80, and determine to stop the remote control when the acquired estimated position reaches the transport starting position. Optionally, the remote control determination unit 316 and the driving control determination unit 216 may determine to stop the remote control when, instead of the estimated position, the position of the vehicle 100 in the transport section that is detected by the transport position detector 526 or the like reaches the transport starting position.

(D2) Each of the embodiments described above shows an example in which the vehicle detector 80 is a LiDAR. By contrast, an external camera provided at a different location than the vehicle 100 can be used as the vehicle detector 80 instead of or together with LiDAR. In this case, the vehicle detector 80 acquires images of the vehicle 100 as the vehicle information. The position estimation unit 314 and the position estimation unit 214 can estimate the position of the vehicle 100 and the orientation of the vehicle 100 using captured images acquired by the external camera. In this case, in step S1 in Fig.4A, the remote control device 300 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system, thereby acquiring the location of the vehicle 100. The remote control device 300 can acquire the orientation of the vehicle 100 through estimation based on the direction of a motion vector of the vehicle 100 detected from change in location of a feature point of the vehicle 100 between frames of the captured images using optical flow process, for example. The orientation of the vehicle 100 may also be calculated, for example, using the results of output of a yaw rate sensor or the like mounted on the vehicle 100.

The outer shape of the vehicle 100 in the captured image may be detected by inputting the captured image to a detection model using artificial intelligence, for example. The detection model is prepared in the transport system 600 or outside the transport system 600. The detection model is stored in advance in the storage device 340 of the remote control device 300, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label.

(D3) Each of the embodiments described above shows an example in which the vehicle 100 is a passenger car, truck, bus, construction vehicle, or the like. However, the vehicle 100 may be a variety of moving objects. In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

(D4) In each of the above-described embodiments, the vehicle 100 is simply required to have a configuration to become movable by unmanned driving. The vehicle 100 may embodied as a platform having the following configuration, for example. The vehicle 100 is simply required to include at least actuators and the ECU 200 as a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the vehicle communication device 190 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(D5) The vehicle 100 may be produced by any production method. For example, the vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D6) In the above-described first embodiment, the remote control device 300 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The remote control device 300 may acquire vehicle location information, determine a target location to which the vehicle 100 is to move next, and generate a route from a current location of the vehicle 100 indicated by the acquired vehicle location information to the target location. The remote control device 300 may generate a route to the target location between the current location and a destination or generate a route to the destination. The remote control device 300 may transmit the generated route to the vehicle 100. The vehicle 100 may generate a running control signal in such a manner as to cause the vehicle 100 to run along the route received from the remote control device 300 and control the actuator 140 using the generated running control signal.
(2) The remote control device 300 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator 140 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the remote control device 300 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(D7) In the above-described embodiment in which the vehicle 100 can be running by autonomous control, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D8) In the third embodiment described above, the vehicle 100 acquires the position and orientation of the vehicle 100 using the detection result of the vehicle detector 80. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator 140 of the vehicle 100 using the generated running control signal. In this case, the vehicle 100 is capable of running without using any detection result from the vehicle detector 80. The vehicle 100 may acquire target arrival time or traffic congestion information from outside the vehicle 100 and reflect the target arrival time or traffic congestion information in at least one of the route and the running control signal. The functional configuration of the transport system 600 may be entirely provided at the vehicle 100. Specifically, the processes realized by the transport system 600 in the present disclosure may be realized by the vehicle 100 alone. Further, all of the structures of the transport system 600 and the functional structures of the remote control device 300 may be provided in the vehicle 100. In other words, the processes implemented by the transport system 600 and the remote control device 300 shown in the present disclosure may be implemented by the vehicle 100 alone.

(D9) In the above-described first embodiment, the remote control device 300 automatically generates a running control signal to be transmitted to the vehicle 100. By contrast, the remote control device 300 may generate a running control signal to be transmitted to the vehicle 100 in response to operation by an external operator existing outside the vehicle 100. For example, the external operator may operate an operating device including a display on which a captured image output from the vehicle detector 80 is displayed, steering, an accelerator pedal, and a brake pedal for operating the vehicle 100 remotely, and a communication device for making communication with the remote control device 300 through wire communication or wireless communication, for example, and the remote control device 300 may generate a running control signal responsive to the operation on the operating device.

(D10) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(D11) Some or all of the functions of the conveyor control unit 412 or the like implemented by the transport control device 400 shown in each of the embodiments described above may be implemented by the remote control device 300. In other words, the transport system 600 may be configured by the remote control device 300 alone.

In each of the above-described embodiments, some or all of functions and processes realized by software may be realized by hardware. Furthermore, some or all of functions and processes realized by hardware may be realized by software. For example, any type of circuit such as an integrated circuit or a discrete circuit may be used as hardware for realizing the functions described in each of the foregoing embodiments.

The present disclosure is not limited to the embodiments described above and is able to be implemented with various configurations without departing from the scope of the appended claims. For example, the technical features of any of the embodiment, the examples and the modifications corresponding to the technical features of each of the aspects described in SUMMARY may be replaced or combined appropriately, in order to solve part or all of the problems described above or in order to achieve part or all of the advantageous effects described above. When the technical features are not described as essential features in the present specification, they are able to be deleted as necessary.

## Claims

1. A transport method switching device, comprising:
a position estimation unit (214;314) configured to estimate a position of a moving object capable of moving by unmanned driving, using moving object information detected by a moving object detector, the moving object information being at least one of an image of the moving object and 3D point cloud data of the moving object, the moving object detector being configured to detect the moving object information;
a command generation unit configured to generate and outputs a control command to automatically move the moving object by movement control using the estimated position of the moving object;
a movement control determination unit configured to determine whether to stop the movement control using a transport starting position of the moving object in a transport device (500), and a moving object position, the transport device (500) being capable of transporting the moving object in a predetermined transport section, the moving object position being a position of the moving object in the transport section and including the estimated position; and
a transport information acquisition unit (218;318) configured to acquire a transport speed (CV) of the moving object transported by the transport device (500),
wherein:
when the movement control determination unit determines to stop the movement control, the movement control determination unit is further configured to confirm the acquired transport speed (CV),
when the confirmed transport speed (CV) is slower than a predetermined reference speed (SV), the command generation unit is configured to turn off a power source of the moving object and stops the movement control, and
when the confirmed transport speed (CV) is equal to or more than the predetermined reference speed (SV), the command generation unit is configured to stop the movement control without turning off the power source of the moving object.

2. The transport method switching device according to claim 1, wherein
when the estimated position reaches the transport starting position, the movement control determination unit determines to stop the movement control.

3. The transport method switching device according to claim 1, wherein
the command generation unit is configured to stop the movement control either by stopping generation of the control command or by stopping transmission of the generated control command to the moving object.

4. The transport method switching device according to any one of claims 1 to 3, wherein
when the movement control determination unit determines to stop the movement control, the command generation unit is configured to switch either to a mode in which power from a prime mover is not transmitted to a movement unit for moving the moving object or to a mode in which a power transmission unit for transmitting power from the prime mover to the movement unit is fixed, and stops the movement control.

5. The transport method switching device according to claim 1, further comprising
a subsequent instruction unit (226;326) configured to output an instruction to delay a timing of arrival of a subsequent moving object to the transport device (500) when the moving object is not transported by the transport device (500) after the movement control is stopped, the subsequent moving object being scheduled to be transported by the transport device (500) next to the moving object.

6. The transport method switching device according to claim 1, further comprising
a notification unit (224;324) configured to provide a notification when the moving object is not transported by the transport device (500) after the movement control is stopped.

7. A transport switching method, comprising:
estimating a position of a moving object capable of moving by unmanned driving, using moving object information being at least one of an image of the moving object and 3D point cloud data of the moving object;
determining whether to stop movement control of the moving object using a transport starting position of the moving object in a transport device (500), and a moving object position, the transport device (500) being capable of transporting the moving object in a predetermined transport section, the moving object position being a position of the moving object in the transport section and including the estimated position of the moving object;
acquiring a transport speed (CV) of the moving object transported by the transport device (500);
when it is determined to stop the movement control, confirming the acquired transport speed (CV);
when the confirmed transport speed (CV) is slower than a predetermined reference speed (SV), turning off a power source of the moving object and stopping the movement control;
and when the confirmed transport speed (CV) is equal to or more than the predetermined reference speed (SV), stopping the movement control without turning off the power source of the moving object.

## Patentansprüche

1. Transportverfahrenumschaltvorrichtung, umfassend:
eine Positionsschätzeinheit (214; 314), die dazu konfiguriert ist, eine Position eines sich bewegenden Objekts, das sich durch unbemanntes Fahren bewegen kann, unter Verwendung von Informationen über das sich bewegende Objekt, die von einem Detektor für sich bewegende Objekte erfasst werden, zu schätzen, wobei die Informationen über das sich bewegende Objekt wenigstens eines von einem Bild des sich bewegenden Objekts und 3D-Punktwolkendaten des sich bewegenden Objekts sind, wobei der Detektor für sich bewegende Objekte dazu konfiguriert ist, die Informationen über das sich bewegende Objekt zu erkennen;
eine Befehlserzeugungseinheit, die dazu konfiguriert ist, einen Steuerbefehl zum automatischen Bewegen des sich bewegenden Objekts durch Bewegungssteuerung unter Verwendung der geschätzten Position des sich bewegenden Objekts zu erzeugen und auszugeben;
eine Bewegungssteuerungsbestimmungseinheit, die dazu konfiguriert ist, zu bestimmen, ob die Bewegungssteuerung gestoppt werden soll, unter Verwendung einer Transportstartposition des sich bewegenden Objekts in einer Transportvorrichtung (500) und einer Position des sich bewegenden Objekts, wobei die Transportvorrichtung (500) das sich bewegende Objekt in einem vorbestimmten Transportabschnitt transportieren kann, wobei die Position des sich bewegenden Objekts eine Position des sich bewegenden Objekts in dem Transportabschnitt ist und die geschätzte Position beinhaltet; und
eine Transportinformationserfassungseinheit (218; 318), die dazu konfiguriert ist, eine Transportgeschwindigkeit (CV) des von der Transportvorrichtung (500) transportierten sich bewegenden Objekts zu erfassen,
wobei:
wenn die Bewegungssteuerungsbestimmungseinheit bestimmt, die Bewegungssteuerung zu stoppen, die Bewegungssteuerungsbestimmungseinheit ferner dazu konfiguriert ist, die erfasste Transportgeschwindigkeit (CV) zu bestätigen,
wenn die bestätigte Transportgeschwindigkeit (CV) langsamer als eine vorbestimmte Referenzgeschwindigkeit (SV) ist, die Befehlserzeugungseinheit dazu konfiguriert ist, eine Leistungsquelle des sich bewegenden Objekts abzuschalten und die Bewegungssteuerung zu stoppen, und
wenn die bestätigte Transportgeschwindigkeit (CV) gleich oder größer als die vorbestimmte Referenzgeschwindigkeit (SV) ist, die Befehlserzeugungseinheit dazu konfiguriert ist, die Bewegungssteuerung ohne das Abschalten der Leistungsquelle des sich bewegenden Objekts zu stoppen.

2. Transportverfahrenumschaltvorrichtung nach Anspruch 1, wobei
wenn die geschätzte Position die Transportstartposition erreicht, die Bewegungssteuerungsbestimmungseinheit bestimmt, die Bewegungssteuerung zu stoppen.

3. Transportverfahrenumschaltvorrichtung nach Anspruch 1, wobei
die Befehlserzeugungseinheit dazu konfiguriert ist, die Bewegungssteuerung entweder durch Stoppen der Erzeugung des Steuerbefehls oder durch Stoppen der Übertragung des erzeugten Steuerbefehls an das sich bewegende Objekt zu stoppen.

4. Transportverfahrenumschaltvorrichtung nach einem der Ansprüche 1 bis 3, wobei
wenn die Bewegungssteuerungsbestimmungseinheit bestimmt, die Bewegungssteuerung zu stoppen, die Befehlserzeugungseinheit dazu konfiguriert ist, entweder in einen Modus, in dem keine Leistung von einer Antriebsmaschine auf eine Bewegungseinheit zum Bewegen des sich bewegenden Objekts übertragen wird, oder in einen Modus umzuschalten, in dem eine Leistungsübertragungseinheit zum Übertragen von Leistung von der Antriebsmaschine auf die Bewegungseinheit fixiert ist, und die Bewegungssteuerung stoppt.

5. Transportverfahrenumschaltvorrichtung nach Anspruch 1, die ferner umfasst:
eine Folgeanweisungseinheit (226; 326), die dazu konfiguriert ist, eine Anweisung auszugeben, um einen Zeitpunkt der Ankunft eines nachfolgenden sich bewegenden Objekts an der Transportvorrichtung (500) zu verzögern, wenn das sich bewegende Objekt nicht von der Transportvorrichtung (500) transportiert wird, nachdem die Bewegungssteuerung gestoppt wurde, wobei geplant ist, dass das nachfolgende sich bewegende Objekt als nächstes nach dem sich bewegenden Objekt von der Transportvorrichtung (500) transportiert wird.

6. Transportverfahrenumschaltvorrichtung nach Anspruch 1, die ferner umfasst:
eine Benachrichtigungseinheit (224; 324), die dazu konfiguriert ist, eine Benachrichtigung bereitzustellen, wenn das sich bewegende Objekt nicht durch die Transportvorrichtung (500) transportiert wird, nachdem die Bewegungssteuerung gestoppt wurde.

7. Transportumschaltverfahren, umfassend:
Schätzen einer Position eines sich bewegenden Objekts, das sich durch unbemanntes Fahren bewegen kann, unter Verwendung von Informationen über das sich bewegende Objekt, die wenigstens eines von einem Bild des sich bewegenden Objekts und 3D-Punktwolkendaten des sich bewegenden Objekts sind;
Bestimmen, ob eine Bewegungssteuerung des sich bewegenden Objekts unter Verwendung einer Transportstartposition des sich bewegenden Objekts in einer Transportvorrichtung (500) und einer Position des sich bewegenden Objekts, wobei die Transportvorrichtung (500) das sich bewegende Objekt in einem vorbestimmten Transportabschnitt transportieren kann, wobei die Position des sich bewegenden Objekts eine Position des sich bewegenden Objekts in dem Transportabschnitt ist und die geschätzte Position des sich bewegenden Objekts beinhaltet;
Erfassen einer Transportgeschwindigkeit (CV) des von der Transportvorrichtung (500) transportierten sich bewegenden Objekts;
wenn bestimmt wird, die Bewegungssteuerung zu stoppen, Bestätigen der erfassten Transportgeschwindigkeit (CV);
wenn die bestätigte Transportgeschwindigkeit (CV) langsamer als eine vorbestimmte Referenzgeschwindigkeit (SV) ist, Abschalten einer Leistungsquelle des sich bewegenden Objekts und Stoppen der Bewegungssteuerung;
und, wenn die bestätigte Transportgeschwindigkeit (CV) gleich oder größer als die vorbestimmte Referenzgeschwindigkeit (SV) ist, Stoppen der Bewegungssteuerung ohne das Abschalten der Leistungsquelle des sich bewegenden Objekts.

## Revendications

1. Dispositif de basculement de procédé de transport, comprenant :
une unité d'estimation de position (214 ; 314) conçue pour estimer la position d'un objet mobile capable de se déplacer sans conducteur, à l'aide d'informations d'objet mobile détectées par un détecteur d'objet mobile, les informations d'objet mobile consistant en une image de l'objet mobile et/ou des données de nuage de points 3D de l'objet mobile, le détecteur d'objet mobile étant conçu pour détecter les informations d'objet mobile,
une unité de génération de commande conçue pour générer et émettre une commande de contrôle visant à déplacer automatiquement l'objet mobile par un contrôle de déplacement à l'aide de la position estimée de l'objet mobile,
une unité de détermination de contrôle de déplacement conçue pour déterminer s'il y a lieu d'arrêter le contrôle de déplacement au moyen de la position de départ de transport de l'objet mobile dans un dispositif de transport (500) et de la position d'objet mobile, le dispositif de transport (500) étant capable de transporter l'objet mobile dans une section de transport prédéterminée, la position d'objet mobile étant la position de l'objet mobile dans la section de transport et comprenant la position estimée, et
une unité d'acquisition d'informations de transport (218 ; 318) conçue pour acquérir une vitesse de transport (CV) de l'objet mobile transporté par le dispositif de transport (500) ;
étant entendu que :
lorsque l'unité de détermination de contrôle de déplacement détermine d'arrêter le contrôle de déplacement, l'unité de détermination de contrôle de déplacement est en outre conçue pour confirmer la vitesse de transport (CV) acquise,
lorsque la vitesse de transport (CV) confirmée est plus lente qu'une vitesse de référence (SV) prédéterminée, l'unité de génération de commande est conçue pour désactiver une source de puissance de l'objet mobile et arrêter le contrôle de déplacement, et
lorsque la vitesse de transport (CV) confirmée est supérieure ou égale à la vitesse de référence (SV) prédéterminée, l'unité de génération de commande est conçue pour arrêter le contrôle de déplacement sans désactiver la source de puissance de l'objet mobile.

2. Dispositif de basculement de procédé de transport selon la revendication 1, dans lequel
lorsque la position estimée atteint la position de départ de transport, l'unité de détermination de contrôle de déplacement détermine d'arrêter le contrôle de déplacement.

3. Dispositif de basculement de procédé de transport selon la revendication 1, dans lequel
l'unité de génération de commande est conçue pour arrêter le contrôle de déplacement soit en arrêtant la génération de la commande de contrôle, soit en arrêtant la transmission de la commande de contrôle générée auprès de l'objet mobile.

4. Dispositif de basculement de procédé de transport selon l'une quelconque des revendications 1 à 3, dans lequel
lorsque l'unité de détermination de contrôle de déplacement décide d'arrêter le contrôle de déplacement, l'unité de génération de commande est conçue pour basculer soit vers un mode dans lequel la puissance provenant d'un moteur principal n'est pas transmise à une unité de déplacement servant à déplacer l'objet mobile, soit vers un mode dans lequel une unité de transmission de puissance servant à transmettre la puissance provenant du moteur principal à l'unité de déplacement est fixe, et arrête le contrôle de déplacement.

5. Dispositif de basculement de procédé de transport selon la revendication 1, comprenant en outre
une unité d'instruction suivante (226 ; 326) conçue pour émettre une instruction visant à retarder le moment d'arrivée d'un objet mobile suivant au niveau du dispositif de transport (500) lorsque l'objet mobile n'est pas transporté par le dispositif de transport (500) après l'arrêt du contrôle de déplacement, l'objet mobile suivant étant prévu pour être transporté par le dispositif de transport (500) après l'objet mobile.

6. Dispositif de basculement de procédé de transport selon la revendication 1, comprenant en outre
une unité d'avertissement (224 ; 324) conçue pour fournir un avertissement lorsque l'objet mobile n'est pas transporté par le dispositif de transport (500) après l'arrêt du contrôle de déplacement.

7. Procédé de basculement de transport, comprenant :
l'estimation de la position d'un objet mobile capable de se déplacer sans conducteur, à l'aide d'informations d'objet mobile consistant en une image de l'objet mobile et/ou des données de nuage de points 3D de l'objet mobile,
la détermination du fait qu'il y a lieu ou non d'arrêter le contrôle de déplacement de l'objet mobile au moyen de la position de départ de transport de l'objet mobile dans un dispositif de transport (500) et de la position d'objet mobile, le dispositif de transport (500) étant capable de transporter l'objet mobile dans une section de transport prédéterminée, la position d'objet mobile étant la position de l'objet mobile dans la section de transport et comprenant la position estimée de l'objet mobile,
l'acquisition d'une vitesse de transport (CV) de l'objet mobile transporté par le dispositif de transport (500),
lorsqu'il est déterminé d'arrêter le contrôle de déplacement, la confirmation de la vitesse de transport (CV) acquise,
lorsque la vitesse de transport (CV) confirmée est plus lente qu'une vitesse de référence (SV) prédéterminée, la désactivation d'une source de puissance de l'objet mobile et l'arrêt du contrôle de déplacement,
et lorsque la vitesse de transport (CV) confirmée est supérieure ou égale à la vitesse de référence (SV) prédéterminée, l'arrêt du contrôle de déplacement sans désactivation de la source de puissance de l'objet mobile.
